# EUROPÄISCHE PATENTSCHRIFT

(11) **EP 2 501 557 B1**
(45) Veröffentlichungstag und Bekanntmachung des Hinweises auf die Patenterteilung: **30.08.2017**
(21) Anmeldenummer: 10784667.7
(22) Anmeldetag: 01.10.2010
(51) Int. Cl.: B60B 9/00, B60B 33/00, B65G 39/06

(54) **NEUARTIGE, STOSS-GEDÄMPFTE RÄDER ODER ROLLEN SOWIE VERFAHREN ZU DEREN HERSTELLUNG**
NOVEL, IMPACT-DAMPED WHEELS OR ROLLERS AND METHOD FOR THE PRODUCTION THEREOF
NOUVEAU TYPE DE ROUES OU CYLINDRES À ABSORPTION DES CHOCS, ET PROCÉDÉ DE FABRICATION CORRESPONDANT

(30) Priorität: 20.11.2009 DE 102009054189
(43) Veröffentlichungstag der Anmeldung: 26.09.2012
(73) Patentinhaber: Cihar, Roman, 07745 Jena (DE)
(72) Erfinder: Cihar, Roman, 07745 Jena (DE)
(74) Vertreter: Donath, Dirk
(86) Internationale Anmeldenummer: PCT/DE2010/001171
(87) Internationale Veröffentlichungsnummer: WO 2011/060750

(56) Entgegenhaltungen:
- EP-A1- 1 394 283
- EP-A1- 1 873 110
- DE-A1- 19 807 086
- JP-A- 2006 106 152

## Beschreibung

Die Erfindung betrifft neuartige, Stoß- gedämpfte Räder und Rollen, insbesondere aus einem metallischen Grundkörper, bspw. Stahl, mit Kunststoffummantelung, welche auf Grund einer gewissen Dämpfung vom Untergrund an spezielle Belastungen / erforderliche Lebensdauer anpassbar sind.

Räder und Rollen finden in den unterschiedlichsten Bereichen des industriellen und sozialen Alltages Anwendung. Dabei müssen die jeweiligen Rollen den Gegebenheiten hinsichtlich Belastungen und Lebensdauer angepasst, der preisliche Aspekt aber beachtet werden. Für den Transport großer Massen, unter Umständen unter erschwerten Bedingungen in Bezug auf Temperatur und chemische Einflüsse, müssen sehr spezielle und damit Kosten aufwendige Produkte angeboten werden. Eine solche Rolle findet aber keinen Absatz für Anwendungen unter weniger kritischen Bedingungen.

Allen Rollen und Rädern gemeinsam ist jedoch die Eigenschaft, dass eine gewisse Dämpfung vom Untergrund erreicht werden muss, auf dem das Rad bzw. die Rolle- vertikal oder horizontal gelagert- läuft. Diese Dämpfung wird technisch entweder durch ein eingeschlossenes Luftpolster oder durch einen mehr oder weniger elastischen Kunststoff realisiert. Beide Methoden weisen Vor- und Nachteile auf. Das Anwendungsfeld der beschriebenen Erfindung erstreckt sich auf das Gebiet der Rollen und Räder ohne Luftpolster.

Je nach Anwendungsfall wird auf die Mantelfläche eines metallischen, zylinderförmigen Werkstückes ein Kunststoff aufgetragen, der bestimmte Eigenschaften aufweisen muss. Hier spezialisieren sich die Ummantelungen hinsichtlich Härte, Abrieb, Elastizität, maximaler radialer und axialer Belastbarkeit, Grenzwerten der Einsatz- und Lagertemperatur sowie chemischer Beständigkeit.

Darüber hinaus ist man jedoch bestrebt, den polymerischen Werkstoff mit möglichst hohen, möglichst dauerhaften Hafteigenschaften an den Untergrund zu versehen. Ein metallischer Untergrund muss für eine optimale Haftung entsprechend präpariert werden. Diese Präparation erfolgt im einfachsten Fall durch eine Reinigung. Je spezialisierter die Anwendung und je höher die Forderungen an die Rolle bzw. an das Rad sind, desto spezieller ist die Art der Präparation ausgeprägt. Das gipfelt in dem Einsatz spezieller Grundierungen für spezielle Kunststoffmischungen. Allen derartigen Grundierungen ist jedoch die lösungsmittelhaltige Basis eigen. Bislang ist keine kommerziell erhältliche Lösung für eine wasserbasierende Haftgrundierung für diesen Einsatzzweck bekannt.

Um bei der Polymerisation beliebiger Kunststoffe eine Haftung des Reaktionsproduktes an ein metallisches Substrat zu gewährleisten, müssen auf dem Substrat bindungsfähige Gruppen für eine molekulare Vernetzung vorliegen. Im Falle der Anbindung von Polyurethanen an Metalloberflächen werden in der Praxis nasschemische Bindemittel in Form von hoch spezialisierten Produkten eingesetzt.
Dafür werden die metallischen Werkstücke zuvor mit Hilfe eines Strahlprozesses aufgeraut. Das hat neben der Erhöhung des Oberflächeninhaltes vor allem den Vorteil, dass das Metall in reiner, nicht oxidischer Form vorliegt. Der anschließende Reinigungsprozess entfernt Residuen des Strahlgutes sowie Reste von Verunreinigungen, die durch das Sandstrahlen nicht entfernt wurden. Auf die saubere, aufgeraute Fläche wird nun die nasschemische Substanz in Form eines speziellen lösungsmittelhaltigen Bindemittels aufgetragen. Nach Austrocknung der Bindemittelschicht im Aufheizprozess unter Absonderung von Lösungsmitteln in Gasphase ist diese an den metallischen Untergrund chemisch und mechanisch angebunden. An der Oberfläche bietet diese Schicht für das Verketten der Polyurethankomponenten Bindungspartner in Form von OH⁻-und O-Gruppen an.
Hersteller, die dieses Verfahren nutzen, sind auf den Einsatz dieser flüssigen, lösungsmittelhaltigen Haftvermittler angewiesen.

Die vorbenannten technischen Lösungen weisen jedoch folgende Nachteile auf:
- hohe Kosten für das auf die Anwendung spezialisierte chemische Bindemittel,
- Ausheilung des chemischen Bindemittels für mehrere Stunden bzw. Tage
- hohe Energieeinträge notwendig (Temperaturen von mehr als 100 Grad Celsius)
- Lösungsmittel- haltiges Bindemittel dampft in hohem Grade Lösungsmittel aus, unterliegt damit immer strenger werdenden Umweltauflagen
- zumeist manueller Auftrag in Produktion und damit relativ hoher Zeitaufwand.

Aus DE 10 2005 025 083 A1 ist ein Verbund mit einem ersten Teil (1) aus einem duroplastischen Material, einem zweiten Teil aus einem thermoplastischen Material und einer dazwischen befindlichen Haftvermittlerschicht bekannt, wobei der erste Teil über die Haftvermittlerschicht mit dem zweiten Teil verbunden ist und die Haftvermittlerschicht pyrolytisch abgeschiedene Halbleiter- und / oder Metalloxide aufweist. Anwendung findet dieser Verbund für Chips und andere Bauteile der Halbleiterindustrie.

DE 197 51 542 A1 offenbart eine Kunststoffmasse zur Umhüllung eines Metall- und / oder Halbleiterkörpers, die wenigstens ein Polymer sowie wenigstens einen Füllstoff aufweist, wobei in dieser Kunststoffmasse zur Verbesserung der Haftung des Kunststoffs auf der Metalloberfläche SiO₂-Partikel mit einer geringen Standardabweichung des mittleren Durchmessers innerhalb einer Durchmesserstufe so vermengt werden, dass sich eine hohe Packungsdichte der SiO₂-Partikel ergibt.

Aus EP 0 365 744 B1 ist ein dentaler Metall / Kunststoff-Verbundkörper mit einer zwischen Metall und Kunststoff angeordneten, Siliciumdioxid enthaltenden Haftvermittlerschicht bekannt, wobei die Haftvermittlerschicht aus Siliciumdioxid und einem oder mehreren Metalloxiden besteht und einen Konzentrationsgradienten aufweist.

DE 197 09 673 A1 offenbart ein Verfahren zur Behandlung von Oberflächen und oberflächennahen Schichten von insbesondere Dentalteilen, bei dem durch eine Aufeinanderfolge mehrerer unterschiedlicher Plasmabehandlungen eine hohe Haftfestigkeit zwischen der mit Plasma behandelten Oberfläche und einer danach aufgebrachten Kunststoffschicht erzielt wird. Des Weiteren offenbart DE 197 09 673 A1 ein Verfahren, bei dem die Oberfläche eines Werkstückes mit Hilfe einer Plasmabehandlung mit einer silikathaltigen Schicht bedeckt und damit versiegelt wird.

Aus DE 10 2004 029 911 A1 ist die Herstellung anorganischer Schichten auf einem Substrat unter Verwendung eines Heißgasstroms und eines einen Precursor enthaltenden Trägergasstroms bekannt, welche bei relativ geringem und gut kontrollierbarem Wärmeeintrag und hoher Materialvielfalt sowohl der beschichtbaren Substrate als auch der Schichten selbst die Herstellung homogener, haftfester Schichten mit deutlich höheren Abscheideraten ermöglicht. Der Heißgasstrom und der Trägerstrom, der deutlich kühler ist als der Heißgasstrom, werden erst in der Nähe des zu beschichtenden Substrats zu einem Gemisch zusammengeführt, dessen Temperatur das Gesamtsubstrat nicht chemisch und/oder physikalisch beeinflusst.

Aus DE 10 2007 039 645 A1 ist ein Verfahren und eine Vorrichtung zur Beschichtung und / oder Modifizierung von anorganischen und organischen Drähten, Fasern oder deren Verbunden bekannt, welche diesen neue Material- und Oberflächeneigenschaften, insbesondere hinsichtlich der Korrosions- und Haftfestigkeit verleihen. Dabei werden die anorganischen oder organischen Drähte, Fasern oder deren Verbunde einer Flamme oder einem Plasma oder einem Heißgasstrom ausgesetzt, wobei die Flamme oder ein Plasma oder ein Heißgasstrom schichtbildende anorganische oder organische Komponenten enthält, so dass diese Komponenten oxidische Beschichtungen oder Modifikationen der Oberflächenstruktur, der Drähte, Fasern oder deren Verbunden bilden.

Die EP 1 873 110 A1 offenbart eine Laufrolle für Führungs- und/oder Transportzwecke, die u.a. für den Transport großer Massen geeignet ist, hohen Belastungen stand hält und aus einem Rollenkörper und einer Bandage aus Elastomermaterial als Zwischenschicht besteht.
Die Bandage besteht dabei aus zwei Komponenten mit unterschiedlicher Härte, wobei die Härte der äußeren Komponente größer ist als die Härte der inneren Komponente.
Die äußere Komponente besteht aus einem elastischen polymeren Werkstoff mit einer Härte größer 90°Sh und die inneren Komponente aus einem Werkstoff mit einer Härte kleiner 90°Sh.
Der Nachteil der Zwischenschicht in Form der Bandage besteht darin, dass sie durch das Abdampfen einer Lösemittel- haltigen Flüssigkeit ausgebildet wird, dass sie chemisch nicht an den metallischen Untergrund angekoppelt und nach ihrer Austrocknung mehrere einhundert Mikrometer dick ist.

Aus der JP 2006 106152 A1 ist eine Rolle für elektrophotographische Geräte (wie bspw. Drucker oder Fotokopierer) bekannt, die aus einem Schaftkörper und einer Schicht aus elastischem Material besteht, wobei zwischen dem Schaftkörper und dem elastischen Material eine SiO₂-Schicht angeordnet ist, die auf den Schaftkörper aufgebracht ist.
Der Nachteil dieser Rolle besteht auf Grund ihrer Zweckbestimmung darin, dass sie nicht zum Transport großer Massen geeignet ist, d.h. keine Transportfunktion eines Rades im engeren Sinne ausüben kann, denn der mit dem elastischen Material vulkanisierte Bereich des Metallschaftes dient lediglich dazu, einen gewissen Verbund zu erzeugen, mit dem der Schaft in der Lage ist, eine Papierlage in einem Drucker oder Kopierer weiter zu transportieren.

Aus der DE 198 07 086 A1 ist Verfahren zur Abscheidung einer SiO₂-Schicht mit einer Schichtdicke von 0,001 bis 10 µm bekannt, bei dem in einem plasma-aktivierten Prozess bei Atmosphärendruck eine erste Gasphase mittels eines elektrischen Feldes in den Plasmazustand versetzt wird, und die plasma-aktivierte erste Gasphase einen Plasmastrahl bildet, in den eine zweite Gasphase eingebracht wird, welche einen oder mehrere Prekursoren und/oder ein Aerosol und/oder einen pulverförmigen Feststoff enthält.

Durch die physikalisch-chemischen Reaktionen zwischen der plasma-aktivierten ersten Gasphase und der zugemischten zweiten Gasphase wird eine Schicht abgeschieden, die bspw. aus SiO₂ besteht und eine haftvermittelnde Funktion (bspw. zum Aufbringen von Lackbeschichtungen) oder Korrosionsschutzfunktion besitzen kann oder der Modifizierung der Oberflächenenergie eines Substrats dient. Darüber hinaus kann diese Schicht auch eine mechanische, elektrische oder optische Funktion aufweisen.

Aus der EP 1 394 283 A1 ist ein Verfahren und eine Vorrichtung zur Herstellung einer SiO₂-Schicht bekannt, welche als großflächige Beschichtung auf Glas oder Edelstahl aufgebracht wird.

Die Aufgabe der vorliegenden Erfindung besteht darin, die zuvor stehend genannten Nachteile des Standes der Technik zu vermeiden, insbesondere neuartige Räder oder Rollen in Form von metallischen Grundkörpern, bspw. Stahl, mit Kunststoffummantelungen, welche auf Grund einer gewissen Dämpfung vom Untergrund an spezielle Belastungen / erforderliche Lebensdauer anpassbar sind, bereit zu stellen, die gegenüber dem Stand der Technik verbesserte Parameter aufweisen und gleichzeitig umweltfreundlich sowie kostengünstig herstellbar sind.

Die Aufgabe wird durch die Merkmale des Patentanspruchs 1 und 4 Patentanspruchs gelöst. Vorteilhafte Ausgestaltungen der Erfindung sind in den nachgeordneten Ansprüchen angegeben.

Das Wesen der erfindungsgemäßen Räder oder Rollen besteht darin, dass sich zwischen einem metallischen Rad- oder Rollenkörper und einer diesen Körper ummantelnden Dämpfungsschicht aus Kunststoff, insbesondere Polyurethan, eine Halbleiter- oxidische Schicht befindet, welche eine Dicke im Bereich von 2 nm bis 200 nm aufweist und als Haftvermittler wirkt.

Um diesen Schichtaufbau zu generieren, wird auf die Mantelfläche rad- oder rollenförmiger Metallkörper eine Halbleiter- oxidische Schicht aufgetragen, auf welche anschließend Polyurethane (PU) aufgebracht und ausgehärtet wird.

Gemäß der Erfindung wird die Halbleiter- oxidische Schicht unter Atmosphärendruck bei normaler Umgebungstemperatur aufgetragen. Dabei kann der Auftrag entweder mit bewegtem metallischen Substrat und fester Emissionsquelle für das ionisierende Plasma oder mit fixiertem metallischen Substrat und bewegter Emissionsquelle für das ionisierende Plasma erfolgen.

Die Halbleiter- oxidische Schicht ist bevorzugt auf Basis von Si oder Ge gebildet.
Als ionisierendes Plasma kann gemäß dem Stand der Technik auf Basis von Lichtbogen, Flamme, Corona erzeugt werden oder HV- Remote-Plasma sein.
Der metallische Zylinder kann aus Fe, A1, Ti, Mg, Sc, Cu, Zn, Sn, Cr, Va, Ni sowie deren Legierungen bestehen.

Alternativ zum metallischen Zylinder kann dieser ebenfalls aus einem harten Kunststoff, basierend auf PA (Polyamid) oder PU (Polyurethan) bestehen.

Auf die metallische Oberfläche des Substrat- Rohlings wird im ersten Schritt eine Halbleiter- oxidische Schicht aufgetragen, die als Haftvermittler wirkt. Das Handling mit Lösungsmittel haltigen Flüssigkeiten als Haftvermittler und den damit verbundenen Trockenzeiten und Einschränkungen entfällt dadurch.
Die Halbleiter- oxidische Schicht wird unter Normaldruckbedingungen unter Raumtemperatur abgeschieden. Dabei kann eine kommerziell verfügbare Vorrichtung verwendet werden, um halbleiterorganische Substanzen im Plasmavolumen zu ionisieren und das freie, bindungsfähige Halbleiter- Ion sowohl im Plasma selbst als auch an der Oberfläche der behandelten Werkstoffe oxidisch zu vernetzen.
Die Schichteigenschaften lassen sich gemäß dem Stand der Technik durch die verwendeten Parameter steuern.

Im darauf folgenden Schritt wird Polyurethan gemäß dem Stand der Technik auf die derartig präparierte Oberfläche aufgetragen. Nach der Vernetzung des Polyurethans haftet dieser fest an der Metalloberfläche an.

Die Erfindung wird nachstehend an Hand der schematischen Zeichnung des Ausführungsbeispiels näher erläutert. Es zeigen:
- Fig. 1:: eine schematische Darstellung einer Ausführungsform eines erfindungsgemäßen Rades,
- Fig. 2:: eine schematische Darstellung einer Anordnung zur Herstellung des Rades gemäß Fig. 1 und
- Fig. 3:: tabellarischer Vergleich der unterschiedlichen Produktionsabläufe.

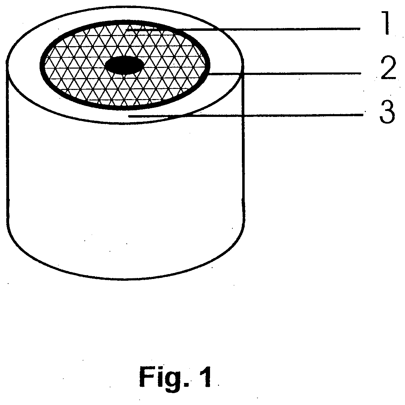

In Fig. 1 ist die Abfolge der einzelnen Schichten bei einer Ausführungsform des erfindungsgemäßen Rades dargestellt. Das zylindrische oder hohlzylindrische metallische Substrat (1) trägt auf seiner Mantelfläche eine fest haftendende Halbleiter- oxidische Schicht (2).
Auf diese Halbleiter- oxidische Schicht (2) ist eine Polyurethanschicht (3) aufgelagert, wobei nach dem Prozess des Auftragens dieser Polyurethanschicht (3) auf die Halbleiter- oxidische Schicht (2) die Polyurethanschicht (3) Schicht während der Vernetzung des Polyurethans fest an Halbleiter- oxidische Schicht (2) anbindet.

Die Halbleiter- oxidische Schicht (2) wird durch Einsatz eines atmosphärischen Beschichtungsverfahrens mit Hilfe einer kommerziell erhältlichen Apparatur bei Raumtemperatur hergestellt. Die Erhöhung der Oberflächentemperatur des behandelten Werkstückes beschränkt sich dabei auf wenige Kelvin. Dabei wird dem aus der Emissionsquelle für das ionisierende Plasma austretenden Gasgemisches zuvor eine Halbleiter organische Substanz beigemischt, die sich nach dem Verlassen der Emissionsquelle für das ionisierende Plasma (4) im Plasmavolumen (5) zu Halbleiter- oxidischen Partikeln umsetzt. Der Umsatz zu diesen Partikeln erfolgt dabei ab der Mündung (6) der Emissionsquelle.

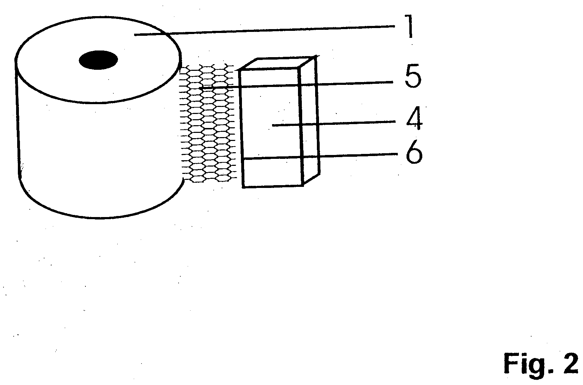

Zum Beschichten wird die zu behandelnde Oberfläche des zylindrischen oder hohlzylindrischen Metallsubstrates (1), wie in Fig. 2 dargestellt, dem Plasmavolumen (5) ausgesetzt, die sich mit einer definierten Umfanggeschwindigkeit zwischen 30 m/h und 4000 m/h, bevorzugt 500 m/h, über die Oberfläche des zylindrischen oder hohlzylindrischen metallischen Substrates (1) bewegt. An der Oberfläche des zylindrischen oder hohlzylindrischen metallischen Substrates (1) kommt es zu einer Vernetzung der Halbleiter- oxidischen Partikel zu einer Halbleiteroxidische Schicht (2). Der Abstand von der Emissionsquelle für das ionisierende Plasma (4) zur Metalloberfläche kann dabei zwischen 3 mm und 200 mm variieren. Bevorzugte Abstände liegen zwischen 3 mm und 50 mm.
Verfahrenstechnisch kann sich dabei entweder das zylindrische oder hohlzylindrische metallische Substrat (1) um seine Zylinderachse drehen wobei das Plasmavolumen (5) und die Emissionsquelle für das ionisierende Plasma (4) fixiert sind, oder die Emissionsquelle für das ionisierende Plasma (4) führt das Plasmavolumen (5) um das zylindrische oder hohlzylindrische metallische Substrat (1) über dessen Mantelfläche herum.
Im Anschluss an diesen Schritt erfolgt der Auftrag der flüssigen Monomere, welche an der Halbleiter- oxidische Schicht (2) zu einem festen Polymer in Form einer Polyurethanschicht (3) vernetzen.

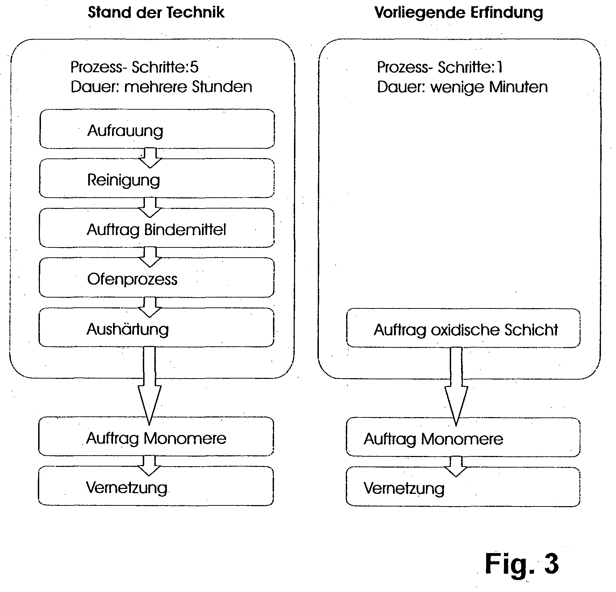

Der Ablauf der Herstellung der erfindungsgemäßen Räder oder Rollen im Vergleich zum Stand der Technik ist in Fig. 3 dargestellt.

Der Vorteil der vorliegenden Erfindung besteht darin, dass mit Hilfe einer kommerziell erhältlichen Vorrichtung innerhalb von Sekunden eine CVD- Schicht auf der Metalloberfläche abgeschieden wird, und zwar bei atmosphärischen Drücken und Raumtemperatur.

Die neue erfindungsgemäße Lösung vermeidet den Einsatz von lösungsmittelhaltigen Flüssigkeiten und umgeht den energie- sowie zeitaufwendigen Ausheilprozess. Nach der Beschichtung mit der erfindungsgemäßen Halbleiter- oxidischen Schicht kann sofort im Anschluss mit dem Auftrag der Polyurethansubstanzen begonnen werden.
Die Beschichtung mit der erfindungsgemäßen Halbleiter- oxidischen Schicht kann direkt in die Fertigungslinie für kontinuierliche Produktion integriert werden. Damit werden erhebliche Kosten eingespart.
Mit Hilfe dieser Lösung ist es möglich, auf ungestrahlte Oberflächen, insbesondere metallische Oberflächen von Rad- oder Rollenkörpern, Polyurethan haftfest aufzutragen, da die Halbleiter- oxidische Schicht mit einer Erhöhung des Oberflächeninhaltes des Werkstückes verbunden ist. Weiterhin ist es mit Hilfe des erfindungsgemäßen Verfahrens möglich, organische Substanzen in Form von Verunreinigungen von der Metalloberfläche zu entfernen, so dass auf eine Wäsche der Werkstücke verzichtet werden kann. Sowohl das Verbrauchsmittel selbst als auch der technische Aufwand für den Auftrag der Halbleiter- oxidischen Schicht ist mit vergleichsweise sehr geringen Kosten verbunden. Bei gleichen oder besseren Haftwerten zwischen Metalloberfläche und Polyurethan stellt das neue Verfahren eine deutlich wirtschaftlichere Alternative dar als der derzeitige Stand der Technik.

Das Anwendungsfeld der vorliegenden Erfindung erstreckt sich auf das Gebiet der Herstellung von Metall- Polyurethanverbindungen ohne den Einsatz bisher verwendeter lösungsmittelhaltiger Grundierungen gemäß dem Stand der Technik zum Direktauftrag auf den Metallkörper, insbesondere zur Herstellung Stoß- gedämpfter Räder und Rollen.

Alle in der Beschreibung, den Ausführungsbeispielen und den nachfolgenden Ansprüchen dargestellten Merkmale können sowohl einzeln als auch in beliebiger Kombination miteinander erfindungswesentlich sein.

### Bezugszeichenliste

1 - zylindrisches oder hohlzylindrisches metallisches Substrat
2 - Halbleiter- oxidische Schicht
3 - Polyurethanschicht
4 - ionisierende Plasma
5 - Plasmavolumen

## Patentansprüche

1. Stoß- gedämpftes Rad oder Stoß- gedämpfte Rolle für den Transport großer Massen bestehend aus einem metallischen Rad- oder Rollenkörper aus einem zylindrischen oder hohlzylindrischen Substrat (1) und einer diesen Körper ummantelnden Dämpfungsschicht aus Kunststoff, wobei sich zwischen dem Rad- oder Rollenkörper und der Dämpfungsschicht eine weitere Schicht befindet, **dadurch gekennzeichnet, dass** die Dämpfungsschicht eine Polyurethanschicht (3) und die weitere Schicht eine Halbleiteroxidische Schicht (2) mit einer Dicke im Bereich von 2 nm bis 200 nm ist, welche eine haftvermittelnde Funktion besitzt.

2. Stoß- gedämpftes Rad oder Stoß- gedämpfte Rolle für den Transport großer Massen gemäß Anspruch 1, **dadurch gekennzeichnet, dass** die Halbleiter- oxidische Schicht (2) S-i oder Ge- basiert ist.

3. Stoß- gedämpftes Rad oder Stoß- gedämpfte Rolle für den Transport großer Massen gemäß Anspruch 1, **dadurch gekennzeichnet, dass** das metallischen Substrat (1) aus Fe, Al, Ti, Mg, Sc, Cu, Zn, Sn, Cr, Va, Ni oder deren Legierungen besteht.

4. Verfahren zur Herstellung eines Stoß- gedämpftes Rades oder einer Stoß- gedämpften Rolle für den Transport großer Massen gemäß Anspruch 1, 2 oder 3, **dadurch gekennzeichnet, dass** ein Schichtaufbau für das Rad oder die Rolle generiert wird, indem auf die Mantelfläche des metallischen Substrats (1) vermittels eines ionisierenden Plasmas unter Atmosphärendruck und bei normaler Umgebungstemperatur eine Halbleiter- oxidische Schicht (2) aufgetragen wird, auf welche anschließend Polyurethane aufgebracht und ausgehärtet wird.

5. Verfahren gemäß Anspruch 4, **dadurch gekennzeichnet, dass** das Verfahren entweder mit bewegtem metallischen Substrat (1) und fester Emissionsquelle für das ionisierende Plasma oder mit fixiertem metallischen Substrat (1) und bewegter Emissionsquelle für das ionisierende Plasma durchgeführt wird.

6. Verfahren gemäß Anspruch 5, **dadurch gekennzeichnet, dass** das ionisierende Plasma auf Basis von Lichtbogen, Flamme, Corona oder HV- Remote- Plasma verwendet wird.

## Claims

1. A shock-absorbing wheel or shock-absorbing roller for the transport of large masses, consisting of a metallic wheel or roller body of a cylindrical or hollow cylindrical substrate (1) and of a damping layer of plastic material encasing this body, wherein a further layer is provided between the wheel or roller body and the damping layer, **characterized in that** the damping layer is a polyurethane layer (3) and the further layer is a semiconductor-oxide layer (2) which has a thickness ranging from 2 nm to 200 nm and which has an adhesionenhancing function.

2. The shock-absorbing wheel or shock-absorbing roller for transporting large masses according to claim 1, **characterized in that** the semiconductor-oxide layer (2) is Si- or Ge-based.

3. The shock-absorbing wheel or shock-absorbing roller for transporting large masses according to claim 1, **characterized in that** the metallic substrate (1) is made of Fe, Al, Ti, Mg, Sc, Cu, Zn, Sn, Cr, Va, Ni or the alloys thereof.

4. A method for producing a shock-absorbing wheel or shock-absorbing roller for transporting large masses according to claim 1, 2 or 3, **characterized in that** a layer structure is produced for the wheel or roller by applying a semiconductor-oxide layer (2) on the encasing layer of the metallic substrate (1) by means of an ionizing plasma under atmospheric pressure and at normal ambient temperature, and then polyurethane is applied to this layer and hardened.

5. The method according to claim 4, **characterized in that** the method is performed either by using a moving metallic substrate (1) and a fixed emission source for the ionizing plasma or by using a fixed metallic substrate (1) and a moving emission source for the ionizing plasma.

6. The method according to claim 5, wherein ionizing plasma based on electric arc, flame or corona or HV remote plasma is used.

## Revendications

1. Roue à absorption des chocs ou cylindre à absorption des chocs pour transporter de grandes masses se composant d'un corps métallique de roue ou de cylindre qui consiste d'un substrat cylindrique ou cylindrique creux (1) et une couche amortissante en plastique enveloppant ce corps et une autre couche entre le corps de roue ou de cylindre et la couche amortissante est **caractérisé en ce que** la couche amortissante est une couche de polyuréthane (3) et l'autre couche est une couche de semi-conducteur oxydique (2) présentant une épaisseur allant de 2 à 200 nm, possédant une fonction promotrice d'adhérence.

2. Roue à absorption des chocs ou cylindre à absorption des chocs pour transporter de grandes masses suivant la revendication 1 est **caractérisé en ce que** la couche de semi-conducteur oxydique (2) est à base de Si ou Ge.

3. Roue à absorption des chocs ou cylindre à absorption des chocs pour transporter de grandes masses suivant la revendication 1 est **caractérisé en ce que** le substrat métallique (1) se compose de Fe, Al, Ti, Mg, Sc, Cu, Zn, Sn, Cr, Va, Ni ou de ses alliages.

4. Procédé pour la fabrication d'une roue à absorption des chocs ou d'un cylindre à absorption des chocs pour transporter de grandes masses suivant les revendications 1, 2 ou 3 est **caractérisé en ce qu'**une composition en couches pour la roue ou le cylindre est générée en appliquant une couche de semi-conducteur oxydique (2) sur la surface enveloppante du substrat métallique (1) au moyen d'un plasma ionisant à pression atmosphérique et à température ambiante, sur laquelle le polyuréthane est par la suite appliqué et durci.

5. Procédé suivant la revendication 4 est **caractérisé en ce que** le procédé est effectué soit avec un substrat métallique en mouvement (1) et une source émettrice fixe pour plasma ionisant, soit avec un substrat métallique fixe (1) et une source émettrice en mouvement pour plasma ionisant.

6. Procédé suivant la revendication 5 est **caractérisé en ce que** le plasma ionisant est utilisé à base de l'arc électrique, flamme, corona ou plasma HT à distance.
